# Europäisches Patentamt
# European Patent Office
# Office européen des brevets

(19)

(11) Publication number: **0 121 504**
**B1**

(12)

# EUROPEAN PATENT SPECIFICATION

(45) Date of publication of patent specification: **07.12.88**

(51) Int. Cl.⁴: **G 11 B 15/44**, G 11 B 15/02

(21) Application number: **84830093.5**

(22) Date of filing: **29.03.84**

(54) **A device for keeping operative and controllably disabling the fast running movement of the tape, particularly for a tape cassette playback and/or recorder apparatus.**

(30) Priority: **31.03.83 IT 4802683**

(43) Date of publication of application:
**10.10.84 Bulletin 84/41**

(45) Publication of the grant of the patent:
**07.12.88 Bulletin 88/49**

(84) Designated Contracting States:
**AT CH DE FR GB IT LI NL**

(56) References cited:
**DE-A-2 942 349**
**DE-A-2 946 195**
**GB-A-2 125 609**
**IT-A-1 004 253**
**US-A-3 624 308**
**US-A-3 665 117**
**US-A-3 735 054**
**US-A-4 187 522**
**US-A-4 228 472**
**US-A-4 229 772**

(73) Proprietor: **AUTOVOX S.p.A.**
**981, via Salaria**
**I-00199 Roma (IT)**

(72) Inventor: **Pera, Vittorio**
**via Bellegra, 35**
**I-00171 Roma (IT)**

(74) Representative: **Cavattoni, Massimo**
**STUDIO TECNICO BREVETTI MASSIMO**
**CAVATTONI Via Archimede, 144**
**I-00197 Roma (IT)**

Courier Press, Leamington Spa, England.

EP 0 121 504 B1

**Description**

The present invention refers to the field of the magnetic tape playback and, or recorder apparatuses, and particularly concerns a device having the function of temporarily keeping operative and then, upon the happening of a subsequent proper control, disabling the mechanism which, manually or electromagnetically driven, causes the tape to run fast in one of its two motion directions, for instance in order to allow the fast search of a prerecorded passage.

In the usual magnetic tape, or even wire, reel playback and, or recorder apparatuses, the fast search of a prerecorded passage is manually carried out by referring to relative figures shown by a resettable tape running counter, or by mentally remembering the silence pauses between a passage and the next one, which occur when the prerecorded magnetic tape passes at high speed past the playback head, even if not loaded against it by the proper spring urged felt.

In the present-day tape cassette recorders, generally, the playback head, as well as the recording and erasing heads, are carried by a head carrying arm and are taken out of the cassette during the fast running movement, in such a way losing the physical contact with the tape. Therefore, only the system of referring to the counter can be utilized.

Particularly, IT-A-1 004 253 describes a tape cassette playback and recorder apparatus of the type in which a first arm, movable with respect to the frame, carries a magnetic playback and recording head and an erasing head, and a second arm, movable with respect to the first arm and to the frame, carries a pressure roller. In such an apparatus when a fast movement of the tape is desired, a fast movement lever is shifted in opposite directions, starting from the rest position, in which it sets the kinematic elements for the normal speed running, towards one of its two fast running positions in its two fast running positions, the fast movement lever sets the kinemtic elements for the fast running of the tape in one of its directions, in order to cause the fast winding or the fast rewinding of the tape into the cassette.

Nevertheless, at present, the requirement of a fast and programmable access to one of the passages of the sequence is being required by the user of the playback and, or recorder apparatuses having a magnetic tape enclosed particularly into standard cassettes or even into the so called microcasettes, in which a number of passages are recorded on each of the pairs of tape tracks.

Such an access can be limited to a fast jump to the next passage, as well as to the reply from the beginning of the passage just listened to, and also to the jump of a programmed number of passages, ahead or behind with respect to the playback direction.

For the aims of the present description, two musical passages are considered separate pieces when they are separated from each other by a pause, i.e. lack of signal, having a duration greater that that of the silences, about 5s long, which can be included into each musical passage.

Some apparatuses are known from the prior art, which permit to select the next passage to be played in various way, In particular, DE-A-2 942 349 refers to a tape transport device in which a mechanical control element can take on five positions: one normal speed position, two fast feed positions and two search positions, one for each direction of motion of the tape, respectively. Due to its structure, this device has a very high number of parts, which fact correspondingly decreases the reliability of the whole apparatus, Furthermore, only the two fast speed positions and the two search positions of the control element are well defined by respective notches, whereas the normal speed position of the device is kept by a spring. This could be particularly dangerous in car radio recorders.

Therefore, the main object of the present invention is to provide a device which stops the fast running of the tape in any of the two directions, and restores the normal playback feeding movement, upon the receipt of a proper electric signal.

A further object of the present invention is to provide a device of the above cited type, simple and cheap to manufacture and suitable for mass production.

The device for keeping operative and controllably disabling the fast feeding movement of the tape, particularly for a playback and, or recorder apparatus, according to the present invention, is characterized in that a means is provided which keeps the fast movement lever in its fast running operative positions and in the normal speed position by cooperation of three notches thereof with a pin provided on the fast movement lever, comprising a first lever elastically connected to a second lever, hinged to the first lever and provided with an armature of an electromagnet, a pin integral with one of the two levers and capable of shifting into a slot carried out in the other lever limiting the reciprocal movement between the first and second levers.

Therefore, an electronic device for the search of the passages, which is not a part of the present invention, counts the above defined pauses and sends, at the end of the programmed pause, a signal capable of acting as a control for the present device to cause the magnetic tape transport mechanism to pass from the configuration of fast movement in one of the two tape running directions to the configuation of tape playback at a normal speed.

The main advantage of the present device is to be simple and reliable, since composed of a limited number of members simple to carry out.

A further advantage of the present device consists in that each member is easy to manufacture and simple to assemble and the whole device is very well suitable for mass production.

In the following, the present invention will be further clarified from the description of some forms of practical embodiment of the device for keeping operative and controllably disabling the fast running movement of the tape, description made in a purely illustrative and not limitative way, with reference to the accompanying drawings, in which:

figure 1 is a plan view and shows a first embodiment form of the device according to the present invention;

figure 2 is a partial plan view and shows a second embodiment form of the present device; and

figure 3 is a partial plan view and shows even another embodiment form of the present device.

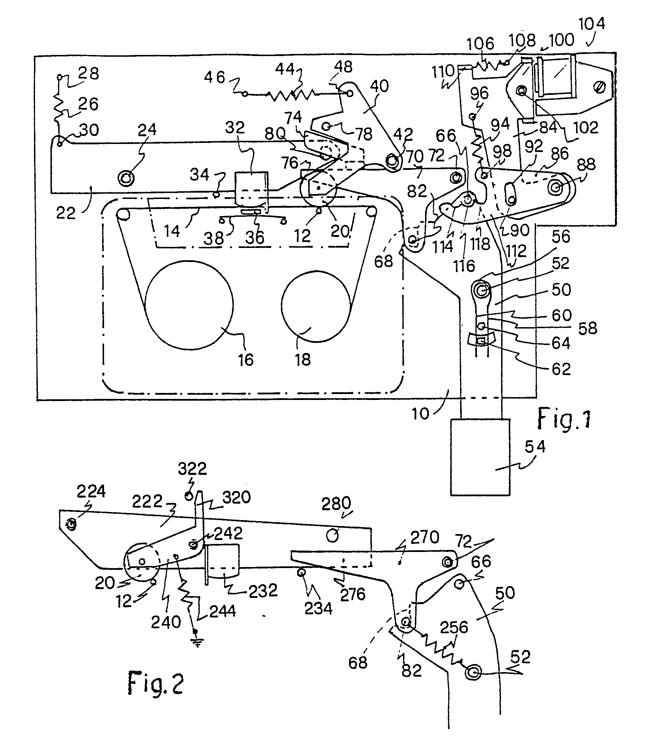

As shown in the drawings, and particularly in figure 1 thereof, the device for keeping operative and controllably disabling the fast running movement of the tape, according to the present invention, is supported on a frame 10, which also acts as a support for the kinematic elements for the tape transport at a normal speed and the fast running of the tape in both its movement directions.

As it is usual in the field of the magnetic tape readers and, or recorders, on the frame 10 a capstan 12 is fixed, so as to be able to rotate, and a magnetic tape 14 is drawn from a feed reel 16 to a take-up reel 18, due to the action of a pressure roller, which urges it against the capstan 12 to pull it.

An arm 22, fulcrumed around a pin 24 integral with the frame 10, is urged to rotate clockwise as viewed in figure 1 by a tension spring 26, having a first end thereof fixed to a pin 28 integral with the frame 10 and the other end thereof anchored to a pin 30 integral with the arm 22. The arm 22 supports a playback head 32 and the spring 26 acts so as to carry the arm 22 into contact against a pin 34 integral with the frame 10, in which position of the arm 22, the head 32 takes on the playback position, leaning on the magnetic tape 14, which is kept in contact with it by a felt 36, loaded by a leaf spring 38.

A second arm 40, fulcrumed around a pin 42 integral with the frame 10, rotatably supports the pressure roller 20 and is urged to rotate counterclockwise as viewed in figure 1, by a tension spring 44, having a first end thereof fixed to a pin 46 integral with the frame 10 and the other end thereof anchored to a pin 48 integral with the arm 40. When, under the action of the spring 44, the arm 40 positions the pressure roller 20 against the capstan 12, as already stated, the normal speed feeding of the tape is carried out.

A usual lever 50 for the operation of the fast transfers of the tape, is also fulcrumed on the frame 10 around a pin 52. The fast movement lever 50 is operated, both manually through a key 54 or by means of an electromagnetic control, so as to be caused to rotate around the pin 52 against the action of a fork-like spring 56, the two prongs 58 and 60 of which alternately act against a tab 62 integral with the frame 10 and against an appendix 64 of the lever 50. In such a way the lever 50 is usually carried back into its central position when the key 54 is left free or, respectively, when the action of the electromagnetic servo-control stops. When it is offset from its central position, the fast movement lever 50 controls, in a way known and not shown in the drawing, the kinematic elements which accomplish the function of moving the tape 14 between the reels 16 and 18 at a fast speed, in the direction which depends on the shift direction of the lever 50 around the pin 52.

According to the present invention, the lever 50 is modified by adding to it a pin 66 integral with it and a V-shaped contour 68, the functions of which will be described later.

A lever 70 is fulcrumed on the frame 10 at a pin 72 and terminates in two fingers 74, 76, arranged on two planes offset with respect to each other and designed to engage, when the lever 70 is caused to rotate around its fulcrum 72, a pin 78 integral with the arm 40 and a pin 80 integral with the arm 22, respectively.

The arm lever 70 also carries a pin 82, which cooperates with the V-shaped contour 68 of the lever 50, in such a way that, when the fast movement lever 50 is caused to rotate around its fulcrum 52 in any of the two possible directions, the arm lever 70 is anyway caused to rotate around its fulcrum 72 clockwise as viewed in the drawing, till reaching an operative or passage search position.

In its operative position, the lever 70, by means of its finger 74, on one hand, keeps the pressure roller 20 away from the tape 14 and capstan 12 and, by means of its finger 76, on the other hand, causes the arm 22 to rotate counterclockwise for a short distance, so that the playback head 32 does no longer urge the tape against the felt 36, but simply skims the tape 14.

Two levers 84 and 86 are fulcrumed on the frame 10 at a pin 88, which acts as a common fulcrum, and can only do quite a little relative movement with respect to each other, limited by the possibility that a pin 90, integral with the lever 84, has to move inside a slot 92, carried out in the lever 86. A tension spring 94, having a first end thereof fixed to a pin 96 integral with the lever 84 and the other end thereof anchored to a pin 98 integral with the lever 86, tends to carry the two levers 84 and 86 into the mutual position shown in figure 1, with the pin 90 being in contact with the end of the slot 92.

The lever 84 also carries an armature 100, fulcrumed to it around a pin 102. An electromagnet 104 is fixed to the frame 10 and the armature 100 is kept near the pole pieces of the electromagnet 104 by the action of a tension spring 106, having a first end thereof fixed to a pin 108 integral with the frame 10 and the other end thereof anchored to a tab 110 performed on the lever 84.

The force exercised by the spring 106 generates a torque, around the fulcrum 88, lesser than that generated by the force exercised by the spring 94, whereas the force exercised by the electromagnet 104 on the armature 100 generates a torque, again around the fulcrum 88, greater in amplitude

3

than that generated by the force exercised by the spring 94.

The lever 86 is further provided with an appendix 112, which has three notches 114, 116 and 118.

The operation of the device of figure 1 will be now described, starting from the position shown, in which the lever 50 is in its rest position and therefore the tape moves reading at a normal speed. When it is desired to carry out the fast search of a passage, one works a control (not shown) of the playback and, or recorder apparatus, which puts into operation the cited electronic device for the search of the passages, which provides for energizing the electromagnet 104, confirming all the mechanical members in their respective positions shown in figure 1.

In particular, the fast movement lever 50, as already stated, is in its rest position and its pin 66 is housed in the notch 116 of the appendix 112 of the lever 86, however without contacting its walls. Infact, the pin 90 is at the stroke end in the slot 92, and thus the levers 84 and 86 act as a single piece under the action of the spring 94 and are kept integral with the frame 10 by the action of the electromagnet 104, whereas the fork-like spring 56 keeps the fast movement lever 50 in its rest position. In such a situation, there is a play between the pin 66 and the notch 116.

Depending on the desired search direction, i.e. depending on whether it is desired to listen again to passages already read or listen to passages recorded on the subsequent part of the tape, the fast movement lever 50 is manually rotated through the key 54 against the action of the fork-like spring 56 till reaching one of its two side positions, to each of which a different direction of fast running of the tape corresponds. At the two fast running positions, the pin 66 of the lever 50 engages one of the two side notches 114 or 118 after having overpassed the point which separates it from the central notch 116, causing a short rotation of the lever 86 counterclockwise as viewed in figure 1, against the action of the spring 94 which yields, whereas the electromagnet 104, being energized, keeps attracted the armature 102 and then fixed the lever 84 with respect to the frame.

Once the pin 86 has been positioned in one of the notches 114 or 118, the spring 94 keeps still the fast movement lever 50, overcoming the action of the fork-like spring 56, as well as the action of the springs 26 and 44 which act on the lever 50 through the arm ever 70.

The rotation of the fast movement lever 50 towards any of the two side positions anyway causes, as alredy stated, the clockwise rotation of the arm lever 70, which, by means of the action of its finger 74 on the pin 78, first causes the arm 40 to rotate clockwise as viewed in figure 1 against the action of the spring 44, taking the pressure roller 20 away from the capstan 12. Subsequently, the lever 70, by means of the action of its finger 76 on the pin 80, causes the arm 22 to rotate counterclockwise as viewed in figure 1, against the action of the spring 26, providing for having the magnetic head 32 drawn back, although always leaving it in contact with the magnetic tape 14, as already stated, till it reaches its operative or passage search position.

In this passage search position thereof, the magnetic head is capable of exploring the sequence of the recorded passages fast, picking up electromagnetic signals from the magnetic tape 14 and sending them to the electronic circuit for the passage search, which provides for processing them. When the end of the pause which precedes the selected passage is detected, the electronic circuit for the search of the passages provides, by means of a method which is not a part of the present invention, for emitting a signal which causes the electromagnet 104 to become deenergized, thus freeing the armature 102.

The combined action of the springs 26, 44 and 56 overcomes the weak action of the spring 106 and carries the fast movement lever 50 back into its rest position. This causes the kinematic members to take again their position of normal speed feeding whereas the arms 22 and 40, under the action of their respective springs 22 and 44 and no longer kept by the arm lever 70, come back to their position shown in figure 1.

Therefore the function of normal speed tape playback is restored and the desired passage is read.

When the fast movement lever 50 has come back to its rest position, the spring 106, no longer opposed, provides for carrying the armature 102 back into contact with· the pole pieces of the electromagnet 104, while the spring 94 carries the lever 86 back into its rest position, with the pin 90 being in contact with the slot 92, as shown in figure 1.

The device is then restored waiting for a new operation by the user for a new passage search.

The present device is also useful as a device for keeping operative the fast running control for the tape, independently from the operation of the key 54 by the user.

In such a case, the electromagnet 104 is always kept energized and therefore, when the user rotates the fast movement lever 50 through the key 54, the pin 66 remains blocked, by the action of the spring 94, in one of the two notches 114 and 118, even if the action on the key 54 stops.

In such a way, the tape continues to be drawn at high speed in one of the two directions, even when the key 54 is released.

In order to restore the function of normal speed play back, it needs then to carry the lever 50, by hand through the key 54, back into its central position, overcoming the action of the spring 94.

In this case, one can provide for the electromagnet 104 to be deenergized for a short time when it is necessary to interrupt the fast movement of the tape, for instance in the case of exhausting of the tape on a reel of a cassette used in the playback and, or recorder apparatus.

Obviously, the two actions can be combined, if the deenergization for a short time of the electromagnet 104 happens both for the reaching of the selected passage, or, for instance, for the reaching of the end of the tape.

It is then to be noted that in the device described with reference to the figure 1 of the accompanying drawings, the arm lever 70, in its rest position, can freely oscillate around the pin 72 for a short distance.

If this causes any drawback, it suffices to provide for a tension spring 256 (see figure 2), fixed with one first end thereof to the pin 82 of the arm lever 70 and with the other end thereof to the pin 52 integral with the frame 10. In this case, the fork-like spring 56 can further be eliminated, as the tension spring 256 acts so as to urge the pin 82 towards the groove of the V-shaped contour 68, thus contemporaneously forcing, on one hand, the fast movement lever 50 towards its rest position, in which a tape feeding at a normal speed is carried out, and, on the other hand, the arm lever 70 towards the position in which the pin 82 is in the depth of the groove of the V-shaped contour 68, as already stated.

Decks in which the pressure roller carrying arm is fulcrumed on the head carrying arm are particularly used, due to their simplicity in embodiment.

An embodiment of the present device, adapted for the use with such decks is shown in figure 2 in a partial way

In the embodiment of figure 2, an arm 222 is fulcrumed around a pin 224 integral with the frame (not shown, but alike the frame 10 of figure 1). The arm 222 supports a playback magnetic head 232 and has a pin 280.

An arm 240 is fulcrumed on the arm 222 around a pin 242 integral with the arm 222 and supports the pressure roller 20 in a freely rotatable way.

A tension spring 244 at the same time urges the pressure roller 20 against the capstan 12 and the arm 222 against a pin 234 integral with the frame.

An appendix 320 of the arm 240 cooperates with a pin 222 integral with the frame.

A lever 270, similar to the lever 70 of figure 1, and having its same functions, is fulcrumed to the frame around to the pin 72 integral with it and carries the pin 82 designed to cooperate with the V-shaped contour 68 of the lever 50. The lever 270 is provided with a single finger 276 designed to engage the pin 280 when the lever 270 is rotated around the pin 72.

In such a way, the rotation of the lever 50 in any of the two directions anyway causes the rotation of the lever 270 clockwise around the pin 72, at the same time, through the action of its finger 276 on the pin 280, causing the arm 222 to move away from the pin 234 and, with a movement amplified by the action of the appendix 320 on the pin 322, the pressure roller 20 to move away from the capstan 12.

As to the remainder, the operation of the embodiment of the present device shown in figure 2 is alike to that of the embodiment of the figure 1 and here will be not repeated for sake of shortness.

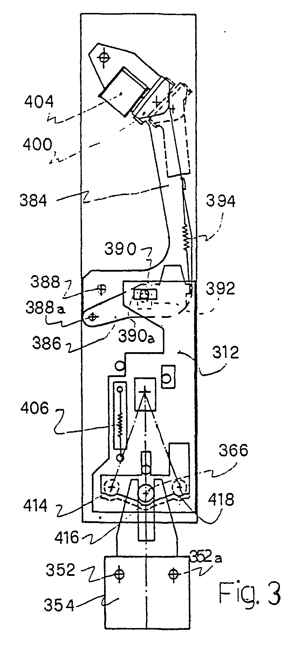

In figure 3 there is shown even another embodiment of the present device, applied to a cassette recorder in which the cassette is inserted so that it faces its longer side parallel to the operation lever, rather than normal to it, as it happened in the embodiments shown in figures 1 and 2. An example of a recorder of this type is described in the Italian Patent 1004253 of the Applicant, to the description of which reference is here made for sake of shortness.

In a recorder of such a type, a key 354 is alternately rotated around two pins 352 and 352a to cause a fast movement lever, only a pin 366 of which is shown, constrained to move with the key 354, to oscillate into one of the two directions. To each of the two directions of oscillation of the fast movement lever corresponds a tape feeding direction, while the pressure roller and the head are anyway kept away from the tape.

According to the present invention, a relay 404 attracts an armature 400, hinged on a lever 384 fulcrumed on a pin 388 integral with the frame. A lever 386 is fulcrumed at 388a on the lever 384 and a tension spring 394 serves to keep in their reciprocal rest position the two lever 384 and 386.

A pin 390 is integral with the lever 386 and slides into a slot 392 of the lever 384, defining the stroke end of the rest position.

A sliding plate 312 can slide longitudinally, as viewed in figure 3, by means of a suitable sliding fit between pins integral with the frame and slots provided on the plate 312 itself.

The plate 312 further has a hole 390a for the engagement with the pin 390 and this hole 390a is slightly oblong in order to allow the transformation of the rotational movement of the lever 386 into a translational movement of the plate 312.

In the plate 312 there are carried out three notches 414, 416 and 418, which cooperate with the pin 366 to keep the fast movement lever and the key 354 in their position of fast movement of the tape, exactly as previously described with reference to figure 1.

Furthermore, a spring 406 serves to recover all the plays when the device is inoperative, till keeping the armature 400 in contact with the relay 404.

With this embodiment, the advantage is further achieved of a lesser cross dimension of the device.

It is further to be noted that the modularity of the present device allows its use as a device for keeping operative the fast tape movement upon the release of the key 54, without the electromagnet 104, the armature 102, the lever 84 and the spring l06, with the simple variation of making the pin 96 for the fastening of the spring 94 integral with the frame 10.

In such a way, the fast movement operation remains till it is disabled by hand, taking the lever 50 back to its rest position, through the key 54, against the action of the spring 94.

**Claims**

1. A device for keeping operative and controllably disabling the fast running movement of the tape, particularly for a tape cassette playback and, or recorder apparatus, of the type in which a first arm (22), movable with respect to the frame, carries at least one magnetic reading head (32), a second arm (40), movable with respect to the frame, carries a pressure roller (20) and a fast movement lever (50) is shifted in opposite directions starting from a rest position, in which it sets the kinematic elements for the normal speed running, towards one of its two positions, in which it sets the kinematic elements for the fast running of the tape in one of its directions to cause the fast rewinding or winding of the tape, which device is characterized in that a means (86, 312) is provided which keeps said fast movement lever in its fast running operative positions and in the normal speed position by cooperation of three notches (114, 116, 118; 414, 416, 418) thereof with a pin (66, 366) provided on said fast movement lever, comprising a first lever (86, 386) elastically connected to a second lever (84, 384), hinged to said first lever and provided with an armature (100) of an electromagnet (104), a pin (90, 390) integral with one of said two levers and capable of shifting into a slot (92) carried out in the other lever limiting the reciprocal movement between said first and second levers.

2. A device according to claim 1, characterized in that said second lever (84) is fulcrumed to the frame at a pin (88) around which said first lever (86) is fulcrumed,

3. A device according to claim 1, characterized in that said second lever (384) is fulcrumed to the frame and said first lever (386) is fulcrumed on a pin (388a) integral with said second lever.

4. A device according to claims 1 or 3, characterized in that into said plate carrying three notches (414, 416, 418), a pin (366), integral with said fast movement lever, is elastically housed and kept when the lever is carried into one of its three operating positions.

5. A device according to any one of the preceding claims, characterized in that an arm lever (70 270) is fulcrumed to the frame around a pin (72) and is provided with a pin (82) which coöperates with a V-shaped contour (68) of the fast movement lever, the arrangement being such that the arm lever is rotated in the same direction when said fast movement lever is rotated in any of the two directions for reaching one of the two positions of fast running movement.

6. A device according to claim 5, characterized in that said arm lever has two fingers and drives, on one hand, the arm of the pressure roller through the engagement of a first (74) of the fingers with a pin (78) thereof and, on the other hand, the head carrying arm through the engagement of a second (76) of the fingers with a pin (80) thereof, during its rotational movement under the action of the fast movement lever.

7. A device according to claim 5, characterized in that said arm lever has only one finger and drives the head carrying arm through the engagement of said finger (276) with a pin (280) thereof, said head carrying arm driving the pressure roller arm with an amplified motion.

8. A device according to any one of claims 5 to 7, characterized in that said pin (82) carried by said arm lever is connected by means of a tension spring (256) to the fulcrum pin (52) of the fast movement lever for urging the two members towards an unambiguously predetermined rest position.

**Patentansprüche**

1. Vorrichtung zur Haltung und zur verstellbaren Ausserdienststellung des Bandes, besonders in einem Magnettongerät oder Aufnahmegerät, wobei ein erster gegenüber dem Gestell bewegbarer Arm (22) wenigstens ein Abtaster (32) trägt, ein zweiter gegenüber dem Gestell bewegbarer Arm (40) eine Druckrolle (20) trägt, und ein Schnellaufhebel (50) in entgegengesetzten Richtungen aus einer Ruhestellung in der er die kinematische Glieder für den Normallauf setzt, in eine seiner zwei Stellungen in der er die kinematische Glieder für den Schnellauf des Bandes in eine seiner zwei Richtungen setzt, verschoben wird für die schnelle Umspulung oder Umwicklung des Bandes, dadurch gekennzeichnet dass ein Mittel (86, 312) vorgesehen ist das den Schnellaufhebel in seine Schnellaufstellungen und in seine Normallaufstellung hält durch die Zusammenarbeit von drei Einschnitten (114, 116, 118; 414, 416, 418) mit einem Zapfen (66, 366) auf dem Schnellaufhebel, der einen ersten Hebel (86, 386) mit einem zweitem Hebel (84, 384) federned verbunden einchliesst der auf dem ersten Hebel aufklappbar ist und mit dem Anker (100) eines Elektromagnet (104) ausgestattet ist und ausserdem einen mit einem der zwei Hebeln einteiligen Zapfen (90, 390) einschlieest, der befähigt ist in ein Schlitz (92) einzutreten der in dem anderen Hebel vorgesehen ist und die abwechselnde Bewegung zwischen dem ersten und dem zweiten Hebel begrenzt.

2. Vorrichtung gemäss Anspruch 1, dadurch gekennzeichnet dass der zweite Hebel (84) auf del Gestell aufgelenkt ist in einem Zapfen (88) auf dem der erste Hebel (86) aufgelenkt ist.

3. Vorrichtung gemäss Anspruch 1, dadurch gekennzeichnet dass der zweite Hebel (384) auf dem Gestell aufgelenkt ist und der erste Hebel (386) in einem Zapfen (388a) augelenkt ist der mit dem zweitem Hebel einteilig ist.

4. Vorrichtung gemäss Ansprüche 1-3 dadurch gekennzeichnet dass in der Platte, die drei Einschnitte (414, 416, 418) trägt, ein Zapfen (366), mit dem Schennaufhebel einteilig, federnd aufgenommen und eingehalten ist wenn der Hebel in eine seiner drei Arbeitsstellungen eingeführt ist.

5. Vorrichtung gemäss der vorstehenden Ansprüchen, dadurch gekennzeichnet dass ein Armhebel (70, 270) auf dem Gestell augelenkt ist in einem Zapfen (72), und mit einem Zapfen (82) ausgestattet ist der zusammen mit einem V-förmigen Rand (68) des Schnellaufhebels arbeitet, wobei der Schnellaufhebel in die eine oder die andere der zwei Richtungen gedreht wird um eine der zwei Schnellaufstellungen zu erreichen.

6. Vorrichtung gemäss Anspruch 5, dadurch gekennzeichnet dass der Armhebel zwei Finger aufweist und auf der eine Seite den Arm der Druckrolle durch die Verbindung eines ersten Fingers (74) mit einem Zapfen (78), und auf der anderen Seite den kopftragenden Arm durch die Verbindung eines zweiten Fingers (76) mit einem Zapfen (80) betätigt, während seiner Drehung die von dem Schnellaufhebel betätigt wird.

7. Vorrichtung gemäss Anspruch 5, dadurch gekennzeichnet dass der Armhebel nur eine Finger aufweist und den kopftragenden Arm durch die Verbindung des Fingers (276) mit einem Zapfen (280) betätigt, wobei der kopftragende Arm den druckrolletragenden Arm mit einer verstärkten Bewegung betätigt.

8. Vorrichtung gemäss einer der Ansprüchen 5-7, dadurch gekennzeichnet dass der von dem Armhebel getragter Zapfen (82) durch einer Zugfeder (256) mit dem Zapfen (52) des Schnellaufhebels verbunden ist um die zwei Glieder gegen eine genau vorbestimmte Ruhestellung zu richten.

**Revendications**

1. Dispositif pour maintenire en service et pour mettre hors service de façon controllable la marche rapide de la bande, particulièrement pour un magnétofone à cassette ou un enregistreur, dans lequel un premier bras (22) mobile par rapport au chassis porte au moins une tête de lecture magnétique (32), un deuxième bras (40) mobile par rapport au chassis porte un rouleau compresseur (20) et un levier pour la marche rapide (50) est déplacé dans des directions opposées à partir d'une position de repos, dans laquelle il met les éléments cinématiques en place pour la marche normale, vers l'une de ses deux positions dans laquelle il met les éléments cinématiques en place pour la marche rapide de la bande dans une de ses directions pour provoquer l'enroulement rapide de la bande, caractérisé par le fait qu'un moyen (86, 312) est prévu pour maintenire le levier de marche rapide dans ses positions de marche rapide ainsi que dans sa position de marche normale par la coopération de trois encoches (114, 116, 118; 414, 416, 418) avenc une cheville (66, 366) prévue sur le levier susdit de marche rapide, comprenant un premier levier (86, 386) relié élastiquement à un deuxième levier (84, 384) axé sur le premier levier et muni d'un induit (100) d'un électro-aimant (104), un pivot (90, 390) solidaire avec un des deuw leviers et capable de se déplacer dans une rainuer (92) réalisée dans l'autre levier qui limite le mouvement alternatif entre le premier et le deuxième levier.

2. Dispositif selon la revendication 1, caractérisé par le fait que le deuxième levier est axé sur le chassis au moyen d'un pivot (88) sur lequel est axé le premier levier (86).

3. Dispositif selon la revendication 1, caractérisé par le fait que le deuxième levier (384) est axé sur le chassis et le premier levier (386) est axé sur un pivot (388a) solidaire avec le deuxième levier.

4. Dispositif selon les revendications 1-3, caractérisé par le fait que dans la plaque portant trois encoches (414, 416, 418), un pivot (366) solidaire avec le levier de marche rapide est logé élastiquement et retenu lorsque le levier est porté dans une de ses trois positions opérationnelles.

5. Dispositif selon l'une ou l'autre des revendications précédentes, caractérisé par le fait qu'un levier à bras (70, 270) est axé sur le chassis au moyen d'un pivot (72) et est muni d'un pivot (82) coopérant avec un contour à forme de V (68) du levier de marche rapide, la disposition étant telle que le levier à bras est tourné dans l'une ou dans l'autre des deux directions pour atteindre une des deux positions de marche rapide.

6. Dispositif selon la revendication 5, caractérisé par le fait que le levier à bras possède deux doigts et actionne d'une part le bras du rouleau compresseur suite à l'engagement d'un premier doigt (74) avec un pivot (78), et d'autre part le bras portetête suite à l'engagement d'un second doigt (76) avec un pivot (80), pendant son mouvement de rotation sous l'action du levier de marche rapide.

7. Dispositif selon la revendication 5, caractérisé par le fait que le levier à bras susdit possède un seul doigt et actionne le bras porte-tête suite à l'engagement du doigt susdit (276) avec un pivot (280), le bras porte-tête susdit actionnant le bras du rouleau compresseur avec un mouvement amplifié.

8. Dispositif selon une quelconque des revendications 5-7, caractérisé par le fait que le pivot susdit (82) porté par le levier à bras est relié au moyen d'un ressort de traction (256) au pivot (52) du levier de marche rapide pour solliciter les deux membres vers une position de repos nettement prédéterminée.

Fig.1

Fig.2

Fig. 3